(19) **Europäisches Patentamt**
**European Patent Office**
**Office européen des brevets**

(11) **EP 2 518 272 B1**

(12) **EUROPEAN PATENT SPECIFICATION**

(45) Date of publication and mention
of the grant of the patent:
**04.05.2022 Bulletin 2022/18**

(21) Application number: **12162774.9**

(22) Date of filing: **30.03.2012**

(51) International Patent Classification (IPC):
**F01D 9/04** *(2006.01)* **F01D 5/14** *(2006.01)*

(52) Cooperative Patent Classification (CPC):
**F01D 9/041; F01D 5/143;** F05D 2220/3213;
F05D 2240/12; Y02T 50/60

(54) **GAS TURBINE ENGINE**

GASTURBINENTRIEBWERK

MOTEUR À TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2011 US 201113093997**

(43) Date of publication of application:
**31.10.2012 Bulletin 2012/44**

(73) Proprietors:
• **Raytheon Technologies Corporation
Farmington, CT 06032 (US)**
• **MTU Aero Engines AG
80995 München (DE)**

(72) Inventors:
• **Praisner, Thomas J.
Colchester, CT 06415 (US)**
• **Allen-Bradley, Eunice
Vernon, CT 06066 (US)**
• **Huebner, Norbert
85221 Dachau (DE)**

(74) Representative: **Dehns
St. Bride's House
10 Salisbury Square
London EC4Y 8JD (GB)**

(56) References cited:
**EP-A2- 1 643 083** **EP-A2- 2 218 874**
**US-A1- 2007 207 035**

**Description**

BACKGROUND

This invention relates generally to turbine engines, and specifically to turbine vane design. In particular, the invention concerns airfoil geometry for turbine vanes.

Gas turbine engines provide reliable, efficient sources of power and mechanical energy for use in aviation, electrical power generation, industrial heating and cooling, hydrocarbon fuel production, naval and marine vessels, and a range of other fluid processing needs. Energy is produced by combustion in a turbine core comprising a compressor, combustor and turbine in flow series with an upstream inlet and a downstream exhaust.

The compressor compresses air from the inlet. The compressed air is mixed with fuel in the combustor, and ignited to produce hot combustion gases. The combustion gases expand in the turbine, which drives the compressor via a common shaft, and then exit via the exhaust. Power is delivered in the form of rotational energy in the shaft or reactive thrust from the exhaust, or both.

In many gas turbines, a number of different turbine and compressor sections are arranged into a series of coaxially nested spools, which operate at different pressures and rotational speeds. The compressor and turbine sections are subdivided into a series of stages, which are formed by alternating rows of rotor blade and stator vanes. The blades and vanes include airfoil sections that are shaped to compress, turn and accelerate incoming air in the compressor section, and to generate lift and extract rotational energy from expanding combustion gas in the turbine section.

Typical compressor and turbine designs include axial, centrifugal and axial/radial flow stages, with both direct and indirect shaft couplings. Depending on configuration, the compressor may also provide cooling air for downstream engine components, including high-pressure compressor and turbine airfoils, and other elements of the combustor, turbine and exhaust that are exposed to hot working fluid flow.

Ground-based industrial gas turbines (IGTs) can be quite large, and may utilize complex spooling systems for increased efficiency. Some industrial turbines are configured for combined-cycle operation, in which additional energy is extracted from the partially-cooled exhaust gas stream, for example in a steam turbine. Industrial gas turbines deliver power via an output shaft connected to a mechanical load such as an electrical generator, blower or pump.

Aviation applications include turbojet, turbofan, turboprop and turboshaft engines. Turbojet engines are an older design, in which thrust is generated primarily from the exhaust. Modern fixed-wing aircraft typically employ turbofan and turboprop configurations, in which the low spool is coupled to a propulsion fan or propeller.

In turboprop aircraft, a reduction gearbox is used to reduce tip speed. For turboshaft engines, which are used on rotary wing aircraft, the reduction ratio is generally higher. Advanced turbofan engines may also include geared drive mechanisms, providing independent fan speed control for reduced engine noise and increased operating efficiency.

Most commercial jets are powered by two- or three-spool high-bypass turbofan engines. High-bypass turbofans generate most of their thrust from the fan, which drives bypass flow through a duct oriented around the engine core. Unducted designs are also known, including counter-rotating and aft-mounted fan configurations.

Low-bypass turbofans produce higher specific thrust, but at some cost in noise and fuel efficiency. Low-bypass turbofans are used on supersonic military jets and other high-performance aircraft, and are commonly configured for thrust augmentation or afterburning. Generally, afterburners are limited to short-duration usage because of the increased operational stress and high rate of fuel consumption, but continuously afterburning turbojet designs are known.

In aviation applications, the main engines also provide power for accessory functions including pneumatics, hydraulics and environmental control, either via the bleed air system or by driving an accessory gearbox coupled to an electrical generator (or both). Alternatively, an auxiliary power unit (APU) is used. APU systems are based on small-scale (usually one-spool) turbine cores, which operate to generate electrical power and supply cabin air while the aircraft is on the ground. APUs can also provide compressed air for main engine startup, and may be configured for in-flight operation to provide an independent or emergency backup power source for hydraulics, avionics and flight control systems.

Across these applications, turbine performance depends on precise control of the working fluid flow, including a detailed understanding of the various subsonic, transonic and supersonic flow components along each section, between individual airfoils, and along adjacent flow boundaries. In particular, lift, acceleration and turning efficiency depend upon on a range of non-linear effects, including turbulence, laminar flow separation, laminar/turbulent boundary transitions, vorticity, shock wave formation and shock interference.

As a result, turbine blade, vane and airfoil design is a highly complex, specialized and unpredictable art, requiring continuous tradeoffs between a range of difficult to quantify flow effects and associated loss mechanisms. Actual part design is further complicated by cooling flow requirements and external constraints on size, weight and material composition, as compared to the required thrust output, and by additional reliability and durability concerns over a wide range of working fluid pressures and temperatures, flow rates, and engine spool speeds.

European Patent Application No. 2218874 discloses a turbine engine in line with the precharacterizing portion of claim 1.

SUMMARY

This invention concerns a turbine engine according to claim 1. Further embodiments are described in the dependent claims.

BRIEF DESCRIPTION OF THE DRAWINGS

FIG. 1 is a cross-sectional view of a gas turbine engine with a high area ratio vane ring.
FIG. 2 is an axial view of the vane ring.
FIG. 3 is a schematic side view of a vane for the vane ring.

DETAILED DESCRIPTION

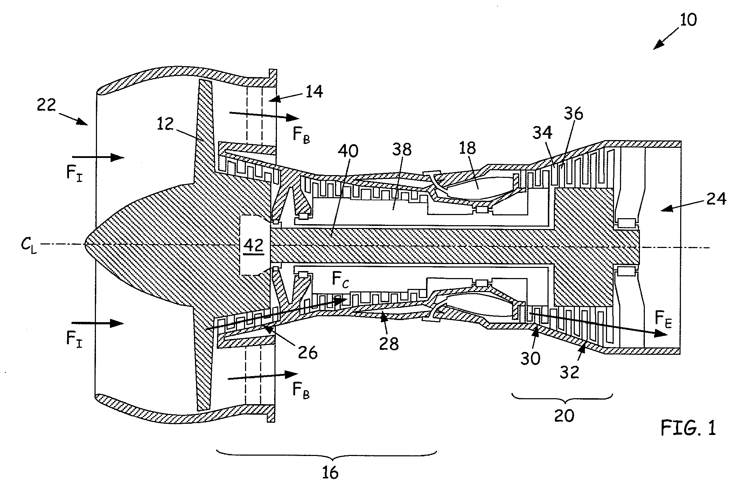

FIG. 1 is a cross-sectional view of gas turbine engine 10, in a turbofan embodiment. In this embodiment, turbine engine 10 comprises fan 12, bypass duct 14, compressor section 16, combustor 18 and turbine section 20. Flow $F_I$ from inlet 22 is accelerated by fan 12 to generate bypass flow $F_B$ through bypass duct 14 and core flow $F_C$ through compressor section 16, combustor 18 and turbine section 20. Exit flow $F_E$ is exhausted from turbine engine 10 at outlet (exhaust nozzle) 24.

For a typical two-spool configuration, compressor section 16 comprises low pressure compressor (LPC) 26 and high pressure compressor (HPC) 28. Turbine 20 comprises high pressure turbine (HPT) 30 and low pressure turbine (LPT) 32. Compressor 16 and turbine 20 are further divided into a number of stages, which are formed by alternating rows of stator vanes 34 and rotor blades 36. Each vane 34 and blade 36 includes an airfoil section with geometry selected for low loss, high efficiency acceleration, turning, lift, compression and expansion of the working fluid flow.

In at least one stage of compressor 16 or turbine 20, vanes 34 form a flow duct with a high area ratio for improved engine performance with reduced flow separation, as described below. In some embodiments, high area ratio vanes 34 are arranged into a turbine vane ring, a transition duct or a turning mid-turbine frame (TMTF) structure positioned between first and second turbine sections, for example high pressure turbine section 30 and low pressure turbine section 32.

In the two-spool, high-bypass configuration of FIG. 1, high pressure shaft 38 couples high pressure compressor 28 to high pressure turbine 30, forming the high pressure (HP) spool or high spool. Low pressure shaft 40 couples low pressure compressor 26 and fan 12 to low pressure turbine 32, forming the low pressure (LP) spool or low spool. The high and low spools are coaxially mounted about turbine axis (centerline) $C_L$, with high pressure shaft 38 and low pressure shaft 40 rotating at different speeds.

Fan 12 comprises a number of fan blades arranged around a disk or other rotating member. Depending on embodiment, fan 12 is configurable for high-bypass operation in a commercial or regional jet, or for low-bypass operation in a high-performance aircraft such as a military jet fighter. In some engines, fan 12 is coupled to the low spool (low pressure shaft 36) via geared fan drive mechanism 42, providing additional fan speed control. Alternatively, fan 12 is directly coupled to low pressure compressor 26, and co-rotates with low pressure shaft 38.

In operation of turbine engine 10, high pressure turbine 30 drives high pressure compressor 28. Low pressure turbine 32 drives low pressure compressor 26 and fan 12, which generates thrust by accelerating incoming airflow $F_I$ from inlet 22 to create bypass flow $F_B$ through bypass duct 14. Low pressure compressor 26 and high pressure compressor 28 compress core flow $F_C$ for combustor 18.

Fuel is injected into combustor 18, where it mixes with the compressed air and is ignited to produce hot combustion gas. The hot combustion gas exits combustor 18 to enter high pressure turbine 30 and low pressure turbine 32, which generate rotational energy from the expanding combustion gas. Exit flow $F_E$ generates additional thrust at exhaust nozzle 24.

Depending on configuration, low pressure compressor 32 may be omitted, or may function as an intermediate pressure (IP) compressor. Alternatively, turbine engine 10 utilizes a three-spool design with separate low, intermediate and high pressure spools. In other embodiments, turbine engine 10 comprises an unducted turbofan, turboprop or turboshaft engine, an auxiliary power unit, or an industrial gas turbine, as described above, and the spool and shaft configurations vary accordingly.

Across these different embodiments, thermodynamic efficiency depends on overall pressure ratio; that is, the ratio of stagnation pressure downstream of compressor 16 and upstream of fan 12. In turbine section 20, performance also depends on the area ratio, which is the ratio of cross-sectional flow areas at the outlet and inlet of the flow duct formed by turbine vanes 34. In particular, expanding the flow path to larger area is beneficial for downstream turbine efficiency, and reduces vibratory stress on rotor blades 36 and other turbine components.

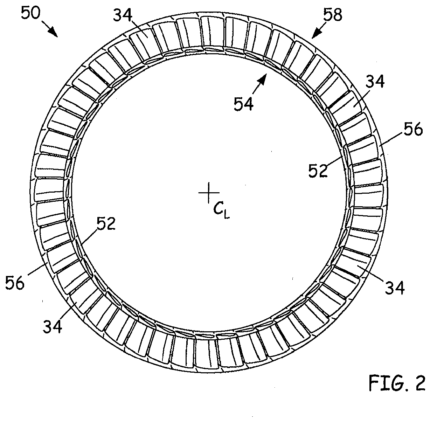

FIG. 2 is an axial view of turbine vane ring 50, taken in a downstream direction along centerline $C_L$ of FIG. 1. Turbine vane ring 50 comprises a plurality of vanes 34, arranged circumferentially about turbine axis $C_L$.

Each vane 34 extends along an airfoil section from inner platform 52 at inner diameter (ID) flow boundary 54 to outer platform (or shroud) 56 at outer diameter (OD) flow boundary 58. The airfoil sections are formed by convex (suction) and concave (pressure) surfaces, which extend between leading and trailing edges defined by the working fluid flow.

In one embodiment, individual turbine vanes 34 are attached to a static turbine support structure to form ID flow boundary (or ID flow ring) 54 along adjacent inner platforms 52, and OD flow boundary (or OD flow ring) 58 along adjacent outer platforms 56. Alternatively, vanes 34 are assembled or manufactured in pairs, triplets or other groupings, and turbine ring 50 may be formed in axially split ring sections, or as a complete annular structure. In some of these configurations, one or both of inner platforms 52 and outer platforms 56 are formed as part ID and OD flow boundaries 56 and 58, respectively, and the airfoil sections are separate components.

In turbine embodiments, vanes 34 may be formed of high-temperature materials such as nickel, cobalt and iron-based alloys, super alloys or ceramic matrix composites. In addition, a bond coat, thermal barrier coating (TBC) or other protective layer may be applied to surfaces exposed to high-temperature working fluid flow.

In lower-temperature applications, for example compressor sections, vanes 34 may be formed of a strong, lightweight metal such as titanium or aluminum, or an alloy thereof. Alternatively, vanes 34 comprise other metals and metal alloys, or graphite, polymers and other composite materials.

In high-temperature applications, vanes 34 are provided with interior passages for impingement or film cooling, or to transport cooling fluid from one turbine component to another. Alternatively, vanes 34 are sized to accommodate additional turbine hardware including tie rods, struts, bearing supports, oil lines and electrical wires for sensors, actuators and controllers.

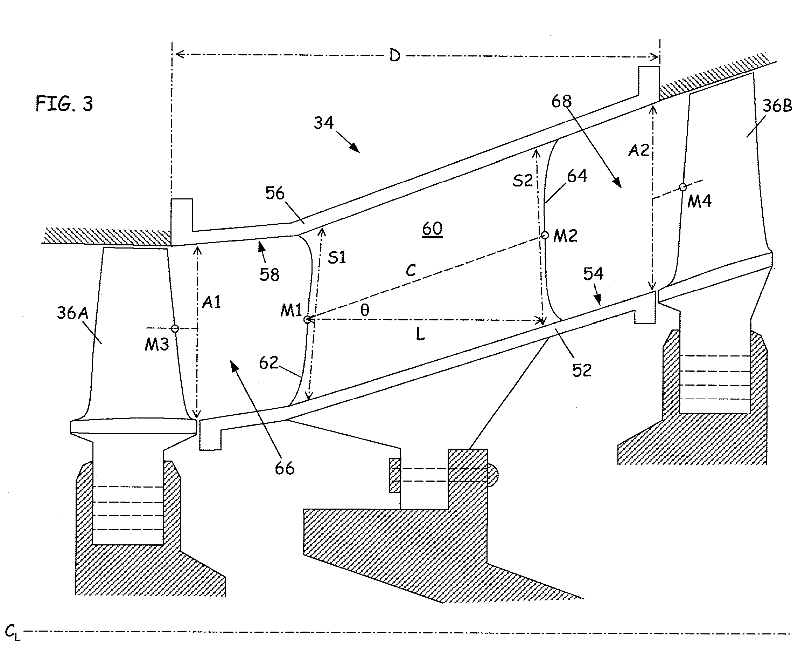

FIG. 3 is a schematic side view of turbine vane 34, in circumferential projection about axial centerline $C_L$ of turbine vane ring 50, as shown in FIG. 2. Vane 34 comprises inner platform 52 at ID boundary 54, outer platform 56 at OD boundary 58, and airfoil section 60.

Airfoil portion (or airfoil) 60 extends in a spanwise sense from inner platform 52 to outer platform 56, and axially from leading edge 62 to trailing edge 64. Leading edge 62 and trailing edge 64 define leading edge (LE) span S1 and trailing edge (TE) span S2, respectively.

Inner platform 52 and outer platform 56 extend along ID boundary 54 and OD boundary 58 between inlet region 66 and outlet region 68, providing an improved flow transition between upstream rotor stage 36A and downstream rotor stage 36B. In particular, turbine vane 34 provides a high area ratio between downstream outlet 68 and upstream inlet 66, expanding the flow path to higher annular area. Vane 34 reduces flow detachment, flow separation, turbulence, vorticity and other loss and vibration-inducing effects, including vibratory effects on rotor stage 36B, immediately downstream of vane 34.

In the particular embodiment of FIG. 3, turbine vane 34 comprises a turning mid-turbine frame vane positioned in a transition duct between a high-pressure turbine section with immediately upstream rotor blade 36A, and a low-pressure turbine section with immediately downstream rotor blade 36B. Alternatively, vane 34 is positioned between high, low, or intermediate sections of a turbine or compressor assembly, or between two rotor stages within a particular turbine or compressor section.

In each of these embodiments, airfoil section 60, inner platform 52 and outer platform 56 of vane 34 are configured for efficient turning, acceleration (or deceleration) and expansion (or compression) of the working fluid flow, between inner flow boundary 54 and outer flow boundary 58. Stator vane 34 also encompasses aerodynamic fairing embodiments, in which turning and acceleration are reduced, but the advantages of increased flow area without substantial flow separation are retained.

In the circumferential projection of FIG. 3, leading edge span S1 and trailing edge span S2 include radial, axial and circumferential components, accounting for forward or aft axial sweep and tangential lean or curvature. Chord length C is defined between mid-span point M1 of leading edge 62, and mid-span point M2 of trailing edge 64.

Duct angle θ is the angle between chord C and the direction of turbine axis $C_L$, and axial chord length L is the axial projection of chord C:

$$L = C \times \cos\theta \,. \qquad\qquad [1]$$

The aspect ratio (AS) of airfoil section 60 is defined by the average of leading edge span S1 and trailing edge span S2, divided by axial chord length L:

$$AS = \frac{(S1 + S2)}{2L} \cdot \qquad [2]$$

The area ratio (AR) of vane 34 (and turbine vane ring 50, see FIG. 2) is the ratio of annular flow area A2 at outlet 68 to annular flow area A1 at inlet 66. Specifically:

$$AR = \frac{A2}{A1} \cdot \qquad [3]$$

Inlet and outlet areas A1 and A2 are defined by the cross-sectional flow area between ID flow boundary 54 and OD flow boundary 58, respectively. For annular flow duct configurations, this is:

$$A1 = \pi(R_{OD}{}^2 - R_{ID}{}^2)\big|_{(inlet)}, \qquad [4]$$

and

$$A2 = \pi(R_{OD}{}^2 - R_{ID}{}^2)\big|_{(outlet)} \cdot \qquad [5]$$

Inner flow duct radius $R_{ID}$ is the radial distance from turbine axis $C_L$ to ID flow boundary 54, and outer radius $R_{OD}$ is the distance from turbine axis $C_L$ to OD flow boundary 58.

For inlet area A1, inner radius $R_{ID}$ is defined along ID flow boundary 54 at the upstream (axially forward) end of inner platform 52, and outer radius $R_{OD}$ is defined along OD flow boundary 58 at the upstream (axially forward) end of outer platform 56.

Similarly, outlet area A2 is defined between ID flow boundary 54 and OD flow boundary 58 at the downstream (axially aft) ends of inner platform 52 and outer platform 56, respectively. A particular area ratio AR can be achieved with a number of uniform vanes 34 all having substantially the same geometry, including aspect ratio AS of airfoil 60, or a number of vanes 34 having different airfoil sections 60 with different aspect ratios AS.

For positive duct angles $\theta$, chord C diverges or extends away from turbine axis $C_L$ in the downstream axial direction, and area ratio AR is generally larger than one because the duct area goes as the square of the radius. Area ratio AR also increases with overall axial length D of vane 34, where axial length D includes both axial chord length L of airfoil 60 and the upstream and downstream contributions of inner platform 52 and outer platform 56.

Larger area ratios AR represent increased radial height along the downstream flow path, reducing endwall losses that account for turbine inefficiency. Vane 34 also provides a more favorable or optimal flow path between the upstream and downstream rotor stages, as described above, reducing flow separation and improving performance while reducing vibration in downstream rotor stage 36B.

Specifically, turbine vane 34 provides a relatively high area ratio AR of greater than 2.4, up to about 2.9. In some embodiments, area ratio AR is about 2.5, or between 2.5 and 2.9, and in other embodiments area ratio AR is at least 2.7, for example between 2.7 and 2.9. In further embodiments, area ratio AR is greater than 2.9, for example about 3.0, or higher.

Area ratio AR increases with (positive) duct angle $\theta$. In some embodiments, duct angle (or local flow path angle) $\theta$ is about ten degrees (10°). Alternatively, duct angle $\theta$ is at least ten degrees, for example between ten degrees and fifteen degrees (10-15°), or between ten degrees and twenty degrees (10-20°). In additional embodiments, duct angle $\theta$ is greater than five degrees (5°), for example between five and fifteen degrees (5-15°), or between five and twenty degrees (5-20°), or between ten and thirty degrees (10-30°). Alternatively, duct angle $\theta$ is larger, for example 25-35° or 20-40°, or 30-45°.

For positive duct angles $\theta$, area ratio AR also increases with chord length C (and axial chord length L). For given span heights S1 and S2, this corresponds to a reduced aspect ratio AS.

In some embodiments, vane 34 comprises a long chord airfoil 60, with aspect ratio AS of about 1.5, or between about 1.4 and about 1.6. In other embodiments, aspect ratio AS is less than about 1.5 or 1.6, for example between 1.2 and 1.6, or between 1.0 and 1.5. In further embodiments, aspect ratio AS is less than 2.0, for example between 1.0 and 2.0.

Area ratio AR also depends on the relative divergence or convergence of ID flow boundary 54 and OD flow boundary 58. Relative convergence and divergence are defined by the increase or decrease in radial spacing $R_{OD}$-$R_{ID}$, as defined between inlet region 66 and outlet region 68.

In the diverging case, where radial spacing $R_{OD}$-$R_{ID}$ (between ID boundary 54 and OD boundary 58) increases from inlet region 66 to outlet region 68, the effect on area ratio AR is also increased. Because of the r-squared effect of duct radius, however, area ratio AR also increases with axial length D when ID and OD boundaries 54 and 58 are substantially parallel; that is, with substantially constant radial spacing (for example, within five or ten percent, including small variations in either direction along the flow duct). In fact, area ratio AR may also increase when ID and OD boundaries 54 and 58 converge between inlet 66 and outlet 68 (that is, with decreasing radial spacing).

These aspects of high area ratio vane 34 are the result of an aggressive design process, requiring a number of complex tradeoffs to achieve precise flow control and maintain flow diffusion without substantial (or even massive) flow separation. In particular, the structure of vane 34 is defined by design choices involving the effects of turbulence, laminar flow transitions, vorticity and shock wave formation, for which the corresponding loss mechanisms are complex, non-linear, and difficult to accurately model or predict.

While this invention has been described with reference to exemplary embodiments, it will be understood by those skilled in the art that various changes may be made without departing from the scope of the invention as defined by the appended claims. In addition, modifications may be made to adapt a particular situation or material to the teachings of the invention, without departing from the essential scope thereof. Therefore, the invention is not limited to the particular embodiments disclosed herein, but includes all embodiments falling within the scope of the appended claims.

**Claims**

1.   A turbine engine (10) comprising an annular flow duct, the flow duct comprising a plurality of vanes (34) which defines the flow duct about a turbine axis ($C_L$), the plurality of vanes comprising:

an airfoil section (60) comprising pressure and suction surfaces extending from a leading edge (62) to a trailing edge (64);
an inner platform (52) attached to the airfoil section along an inner flow boundary (54), the inner flow boundary extending from an upstream inlet region (66) of the vanes to a downstream outlet region (68) of the vanes;

and an outer platform (56) attached to the airfoil section along an outer flow boundary (58), the outer flow boundary extending from the upstream inlet region to the downstream outlet region;

wherein the flow duct further comprises an inlet area (A1) and an outlet area (A2),
wherein the inlet area (A1) has:

an inner radius ($R_{ID}$) defined as the radial distance from the turbine axis ($C_L$) to the inner flow boundary (54) at the upstream end of the inner platform (52), and
an outer radius ($R_{OD}$) defined as the radial distance from the turbine axis ($C_L$) to the outer flow boundary (58) at the upstream end of the outer platform (56), and

the outlet area (A2) has:

an inner radius ($R_{ID}$) defined as the radial distance from the turbine axis ($C_L$) to the inner flow boundary (54) at the downstream end of the inner platform (52), and
an outer radius ($R_{OD}$) defined as the radial distance from the turbine axis ($C_L$) to the outer flow boundary (58) at the downstream end of the outer platform (56),

and the inlet and outlet areas are defined as:

$$A1 = \pi \left( R_{OD}{}^2 - R_{ID}{}^2 \right)\Big|_{(inlet)}$$

and

$$A2 = \pi \left( R_{OD}{}^2 - R_{ID}{}^2 \right)\Big|_{(outlet)} ,$$

**characterized in that** an area ratio (AR) of the outlet area (A2) to the inlet area (A1) is greater than 2.4 and less than 2.9.

**2.** The turbine engine of claim 1, wherein the area ratio is between 2.4 and 2.6.

**3.** The turbine engine of claim 1, wherein the area ratio is between 2.5 and 2.9.

**4.** The turbine engine of claim 1 or 2, wherein the area ratio is at least 2.5.

**5.** The turbine engine of any preceding claim, wherein an aspect ratio (AS) of the airfoil section is less than 2.0; preferably wherein the aspect ratio is 1.5 or less, wherein the aspect ratio of the airfoil section is defined as the average of a leading edge span (S1) and a trailing edge span (S2) of the airfoil section divided by the axial chord length (L) at mid-span.

**6.** The turbine engine of any preceding claim, wherein a radial spacing between the inner flow boundary (54) and the outer flow boundary (58) varies between the inlet region (66) and the outlet region (68).

**7.** The turbine engine of any preceding claim, wherein the airfoil section (60) defines a local flow angle ($\theta$) of at least ten degrees with respect to the turbine axis ($C_L$), wherein the local flow angle is defined as the angle between the local chord (C) and a direction of the turbine axis ($C_L$) in a plane containing the turbine axis ($C_L$).

**8.** The turbine engine of claim 7, wherein the plurality of turbine vanes (34) define a duct angle ($\theta$) of the annular flow duct of at least ten degrees with respect to the turbine axis ($C_L$), wherein the duct angle is defined as the angle between the mid-span chord (C) and a direction of the turbine axis (CL) in a plane containing the turbine axis (CL).

**9.** The turbine engine of any preceding claim, further comprising:

a first turbine section upstream of the turbine section; and
a second turbine section downstream of the turbine section;

wherein the annular flow duct comprises a transition duct between the first turbine section and the second turbine section.

**10.** A turbofan engine comprising the turbine engine (10) of any preceding claim in flow series with a compressor (16) and a propulsion fan (12).

**Patentansprüche**

**1.** Turbinentriebwerk (10), das einen ringförmigen Strömungskanal umfasst, wobei der Strömungskanal eine Vielzahl von Leitschaufeln (34) umfasst, welche den Strömungskanal um eine Turbinenachse ($C_L$) definiert, wobei die Vielzahl von Leitschaufeln Folgendes umfasst:

einen Schaufelprofilabschnitt (60), der eine Druckfläche und eine Ansaugfläche umfasst, die sich von einer Vorderkante (62) zu einer Hinterkante (64) erstrecken;
eine innere Plattform (52), die an dem Schaufelprofilabschnitt entlang einer inneren Strömungsgrenze (54) befestigt ist, wobei sich die innere Strömungsgrenze von einer stromaufwärtigen Einlassregion (66) der Leitschaufeln zu einer stromabwärtigen Auslassregion (68) der Leitschaufeln erstreckt; und
eine äußere Plattform (56), die mit dem Schaufelprofilabschnitt entlang einer äußeren Strömungsgrenze (58) befestigt ist, wobei sich die äußere Strömungsgrenze von der stromaufwärtigen Einlassregion zu der stromabwärtigen Auslassregion erstreckt;
wobei der Strömungskanal ferner einen Einlassbereich (A1) und einen Auslassbereich (A2) umfasst,
wobei der Einlassbereich (A1) Folgendes aufweist:

einen Innenradius ($R_{ID}$), der als der radiale Abstand von der Turbinenachse ($C_L$) zu der inneren Strömungsgrenze (54) an dem stromaufwärtigen Ende der inneren Plattform (52) definiert ist, und
einen Außenradius ($R_{OD}$), der als der radiale Abstand von der Turbinenachse ($C_L$) zu der äußeren Strömungsgrenze (58) an dem stromaufwärtigen Ende der äußeren Plattform (56) definiert ist, und
wobei der Auslassbereich (A2) Folgendes aufweist:

einen Innenradius ($R_{ID}$), der als der radiale Abstand von der Turbinenachse ($C_L$) zu der inneren Strömungsgrenze (54) an dem stromaufwärtigen Ende der inneren Plattform (52) definiert ist, und einen Außenradius ($R_{OD}$), der als der radiale Abstand von der Turbinenachse ($C_L$) zu der äußeren Strömungsgrenze (58) an dem stromaufwärtigen Ende der äußeren Plattform (56) definiert ist, und wobei der Einlass- und Auslassbereich definiert sind als:

$$A1 \; = \; \pi \; (R_{OD}{}^2 \; - \; R_{ID}{}^2) \, |_{(Einlass)}$$

und

$$A2 \; = \; \pi \; (R_{OD}{}^2 \; - \; R_{ID}{}^2) \, |_{(Auslass)},$$

**dadurch gekennzeichnet, dass** ein Bereichsverhältnis (AR) des Auslassbereichs (A2) zu dem Einlassbereich (A1) größer als 2,4 und kleiner als 2,9 ist.

2. Turbinentriebwerk nach Anspruch 1, wobei das Bereichsverhältnis zwischen 2,4 und 2,6 liegt.

3. Turbinentriebwerk nach Anspruch 1, wobei das Bereichsverhältnis zwischen 2,5 und 2,9 liegt.

4. Turbinentriebwerk nach Anspruch 1 oder 2, wobei das Bereichsverhältnis mindestens 2,5 ist.

5. Turbinentriebwerk nach einem der vorhergehenden Ansprüche, wobei das Seitenverhältnis (AS) des Schaufelprofilabschnitts kleiner als 2,0 ist; wobei das Seitenverhältnis bevorzugt 1,5 oder kleiner ist, wobei das Seitenverhältnis des Schaufelprofilabschnitts als der Durchschnitt von einer Vorderkantenspannweite (S1) und einer Hinterkantenspannweite (S2) des Schaufelprofilabschnitts definiert ist, der durch die axiale Sehnenlänge (L) bei Mittelspannweite geteilt ist.

6. Turbinentriebwerk nach einem der vorhergehenden Ansprüche, wobei ein radialer Abstand zwischen der inneren Strömungsgrenze (54) und der äußeren Strömungsgrenze (58) zwischen der Einlassregion (66) und der Auslassregion (68) variiert.

7. Turbinentriebwerk nach einem der vorhergehenden Ansprüche, wobei der Schaufelprofilabschnitt (60) einen lokalen Strömungswinkel ($\theta$) von mindestens zehn Grad in Bezug auf die Turbinenachse ($C_L$) definiert, wobei der lokale Strömungswinkel als der Winkel zwischen der lokalen Sehne (C) und einer Richtung der Turbinenachse ($C_L$) auf einer Ebene definiert ist, die die Turbinenachse ($C_L$) enthält.

8. Turbinentriebwerk nach Anspruch 7, wobei die Vielzahl von Turbinenleitschaufeln (34) einen Kanalwinkel ($\theta$) des ringförmigen Strömungswinkels von mindestens zehn Grad in Bezug auf die Turbinenachse ($C_L$) definiert, wobei der Kanalwinkel als der Winkel zwischen der Mittelspannweitensehne (C) und einer Richtung der Turbinenachse (CL) auf einer Ebene definiert ist, die die Turbinenachse (CL) enthält.

9. Turbinentriebwerk nach einem der vorhergehenden Ansprüche, ferner umfassend:

   einen ersten Turbinenabschnitt stromaufwärts von dem Turbinenabschnitt; und
   einen zweiten Turbinenabschnitt stromabwärts von dem Turbinenabschnitt;
   wobei der ringförmige Strömungskanal einen Übergangskanal zwischen dem ersten Turbinenabschnitt und dem zweiten Turbinenabschnitt umfasst.

10. Turbogebläsetriebwerk, das das Turbinentriebwerk (10) nach einem der vorhergehenden Ansprüche in Strömungsreihe mit einem Verdichter (16) und einem Vortriebsgebläse (12) umfasst.


**Revendications**

1. Moteur à turbine (10) comprenant un conduit d'écoulement annulaire, le conduit d'écoulement comprenant une pluralité d'ailettes (34) qui définit le conduit d'écoulement autour d'un axe de turbine ($C_L$), la pluralité d'ailettes comprenant :

une section de profil aérodynamique (60) comprenant des surfaces de pression et d'aspiration s'étendant d'un bord d'attaque (62) à un bord de fuite (64) ;

une plateforme interne (52) fixée à la section de profil aérodynamique le long d'une limite d'écoulement interne (54), la limite d'écoulement interne s'étendant d'une région d'entrée amont (66) des ailettes à une région de sortie aval (68) des ailettes ; et

une plateforme externe (56) fixée à la section de profil aérodynamique le long d'une limite d'écoulement externe (58), la limite d'écoulement externe s'étendant de la région d'entrée amont à la région de sortie aval ;

dans lequel le conduit d'écoulement comprend en outre une zone d'entrée (A1) et une zone de sortie (A2), dans lequel la zone d'entrée (A1) a :

un rayon interne ($R_{ID}$) défini comme la distance radiale entre l'axe de turbine ($C_L$) et la limite d'écoulement interne (54) au niveau de l'extrémité amont de la plateforme interne (52), et

un rayon externe ($R_{OD}$) défini comme la distance radiale entre l'axe de turbine ($C_L$) et la limite d'écoulement externe (58) au niveau de l'extrémité amont de la plateforme externe (56), et

la zone de sortie (A2) a :

un rayon interne ($R_{ID}$) défini comme la distance radiale entre l'axe de turbine ($C_L$) et la limite d'écoulement interne (54) au niveau de l'extrémité aval de la plateforme interne (52), et

un rayon externe ($R_{OD}$) défini comme la distance radiale entre l'axe de turbine ($C_L$) et la limite d'écoulement externe (58) au niveau de l'extrémité aval de la plateforme externe (56),

et les zones d'entrée et de sortie sont définies comme suit :

$$A1 \;=\; \pi\,(R_{OD}{}^2 \;-\; R_{ID}{}^2)\,|\;_{(entrée)}$$

et

$$A2 \;=\; \pi\,(R_{OD}{}^2 \;-\; R_{ID}{}^2)\,|\;_{(sortie)},$$

**caractérisé en ce qu'**un rapport de zone (AR) de la zone de sortie (A2) à la zone d'entrée (A1) est supérieur à 2,4 et inférieur à 2,9.

2. Moteur à turbine selon la revendication 1, dans lequel le rapport de zone est compris entre 2,4 et 2,6.

3. Moteur à turbine selon la revendication 1, dans lequel le rapport de zone est compris entre 2,5 et 2,9.

4. Moteur à turbine selon la revendication 1 ou 2, dans lequel le rapport de zone est d'au moins 2,5.

5. Moteur à turbine selon une quelconque revendication précédente, dans lequel un rapport d'aspect (AS) de la section de profil aérodynamique est inférieur à 2,0 ; de préférence, dans lequel le rapport d'aspect est de 1,5 ou moins, dans lequel le rapport d'aspect de la section de profil aérodynamique est défini comme la moyenne d'une étendue de bord d'attaque (S1) et d'une étendue de bord de fuite (S2) de la section de profil aérodynamique divisée par la longueur de corde axiale (L) à mi-distance.

6. Moteur à turbine selon une quelconque revendication précédente, dans lequel un espacement radial entre la limite d'écoulement interne (54) et la limite d'écoulement externe (58) varie entre la région d'entrée (66) et la région de sortie (68).

7. Moteur à turbine selon une quelconque revendication précédente, dans lequel la section de profil aérodynamique (60) définit un angle d'écoulement local ($\theta$) d'au moins dix degrés par rapport à l'axe de turbine ($C_L$), dans lequel l'angle d'écoulement local est défini comme l'angle entre la corde locale (C) et une direction de l'axe de turbine ($C_L$) dans un plan contenant l'axe de turbine ($C_L$).

8. Moteur à turbine selon la revendication 7, dans lequel la pluralité d'ailettes de turbine (34) définissent un angle de conduit ($\theta$) du conduit d'écoulement annulaire d'au moins dix degrés par rapport à l'axe de turbine ($C_L$), dans lequel l'angle de conduit est défini comme l'angle entre la corde à mi-distance (C) et une direction de l'axe de turbine (CL) dans un plan contenant l'axe de turbine (CL).

**9.** Moteur à turbine selon une quelconque revendication précédente, comprenant en outre :

une première section de turbine en amont de la section de turbine ; et
une seconde section de turbine en aval de la section de turbine ; dans lequel le conduit d'écoulement annulaire comprend un conduit de transition entre la première section de turbine et la seconde section de turbine.

**10.** Turboréacteur à double flux comprenant le moteur à turbine (10) selon une quelconque revendication précédente en série d'écoulement avec un compresseur (16) et une soufflante de propulsion (12).

FIG. 1

FIG. 2

FIG. 3

EP 2 518 272 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2218874 A